# DEMANDE DE BREVET EUROPEEN

(11) **EP 0 872 435 A1**
(43) Date de publication de la demande: **21.10.1998**
(21) Numéro de dépôt: 98106235.9
(22) Date de dépôt: 06.04.1998
(51) Int. Cl.: B65G 17/00

(54) **Convoyeur écatreux**

(30) Priorité: 18.04.1997 IT VI970059
(71) Demandeur: COSTRUZIONI MECCHANICHE SOTTORIVA S.p.A., I-36035 Marano Vicentino (Vicenza) (IT)
(72) Inventeur: Sottoriva, Claudio, 36035 Marano Vicentino (Vicenza) (IT)
(74) Mandataire: Bettello, Pietro, Dott. Ing.

(57) **Abrégé**

Il s'agit d'une bande transporteuse écarteuse composée de deux chaînes à maillons (1) entraînées en mouvement entre un arbre moteur et un arbre conduit supportés par des longerons latéraux (13), lesdits maillons étant réunis les uns aux autres par des tiges (2) placées perpendiculairement au plan des chaînes. Ladite bande est caractérisée en ce que, sur chaque tige, sont emboîtées de façon folle au moins deux traverses (3, 4) distinctes et séparées, qui vont constituer au moins deux bandes transporteuses (5, 6), elles aussi distinctes et séparées. Il est prévu en outre des moyens aptes à espacer les uns des autres les traverses qui composent une bande des traverses qui composent la bande adjacente, pour réaliser des parcours écartés l'un de l'autre.

## Description

L'invention concerne une bande transporteuse conforme au préambule de la revendication 1.

Ainsi qu'il est bien connu dans l'industrie du travail des pâtes alimentaires, on utilise, entre autres systèmes, pour le transport des morceaux de pâte fraîche d'une station de travail à l'autre, des bandes transporteuses essentiellement constituées par deux chaînes à maillons disposées parallèlement et réunies l'une à l'autre par des tiges perpendiculaires à l'axe des chaînes et généralement parallèles entre elles.

Sur chaque tige est emboîtée une traverse, de sorte qu'en se juxtaposant mutuellement, les traverses forment une bande transporteuse sur laquelle sont placés les morceaux de pâte à transporter.

Les nécessités du travail exigent quelquefois que les morceaux de pâte qui sortent d'une station de travail alignés sur deux ou plus de deux files, entrent dans la station de travail suivante en restant encore alignés sur deux ou plus de deux files mais qui sont espacées l'une de l'autre ; c'est-à-dire qu'il doit se produire une action d'écartement entre une file desdits produits alignés et l'autre.

Dans l'état actuel de la technique, on obtient cette action d'écartement en disposant, au-dessus de la bande transporteuse, des transporteurs, convenablement conformés, qui écartent progressivement une file de morceaux de pâte de la file disposée à côté.

Le but de la présente invention est de réaliser une bande transporteuse du type décrit plus haut qui permette d'écarter les morceaux de pâte disposés sur plusieurs files parallèles sans utilisation de dispositifs additionnels et qui soit facilement réglable pour pouvoir réaliser les différentes amplitudes d'écartement nécessaires d'une façon automatique.

Le but est atteint grâce à une bande transporteuse selon les enseignements de la revendication 1.

Des formes de réalisation avantageuses de l'invention font l'objet des sous-revendications.

Il est tout d'abord prévu que, sur chaque tige qui relie un maillon de la chaîne à un maillon de la chaîne opposée, soient emboîtées au moins deux traverses distinctes, qui sont initialement juxtaposées mais qui peuvent s'éloigner latéralement l'une de l'autre.

De cette façon, on réalise une bande transporteuse composée d'au moins deux entités transporteuses formant des chemins coulissants, qui correspondent aux deux files ou séries de traverses.

De plus, grâce aux moyens d'espacement entre des séries de traverses adjacentes, ces chemins coulissants sont voisins au début de la bande transporteuse, tandis qu'à la fin, ils sont au contraire éloignés l'un de l'autre.

On réalise l'action d'écartement d'au moins un chemin coulissant, de telle manière que la portion finale de ce chemin ne soit plus dans l'alignement de la portion initiale de ce même chemin, en déplaçant latéralement chaque traverse qui compose aussi bien la partie intermédiaire que la partie finale dudit chemin.

Le déplacement latéral de ces traverses sera de type incrémental pour les traverses qui composent la portion intermédiaire, c'est-à-dire que chaque élément se déplace latéralement d'une petite quantité par rapport à l'élément qui le précède, tandis que toutes les traverses qui composent la portion finale se déplacent latéralement de la même distance.

Du point de vue fonctionnel, on réalise le déplacement latéral des traverses en contraignant ces dernières à se déplacer en suivant des guides convenablement conformés.

On réalise un système de ce genre, par exemple en munissant les traverses d'une saillie inférieure qui entre en prise avec une barre disposée au-dessous de chaque plan coulissant.

Plus précisément, au-dessous de chaque chemin coulissant dont est pourvue la bande transporteuse, est prévue une barre articulée composée de trois portions qui sont normalement alignées, conformément à la direction d'avance de la bande transporteuse.

Lorsqu'on commande l'écartement des files des produits alignés sur la bande transporteuse, au moins une des deux portions d'extrémité qui composent la barre se déplace latéralement, perpendiculairement à la direction d'avance de la bande transporteuse précitée, de sorte que la portion intermédiaire, articulée entre les deux portions précédentes, est contrainte à se disposer en position inclinée par rapport à ladite direction.

Une première forme de réalisation prévoit que le guidage des traverses est obtenu au moyen d'une rainure ménagée sur le corps de la barre.

Une deuxième forme de réalisation prévoit que le guidage des traverses est obtenu au contraire au moyen d'une lame fixée latéralement au corps de la barre.

Avec chacun des deux systèmes, on réalise une liaison qui est inclinée par rapport à la direction d'avance de la bande transporteuse, de sorte que les traverses, entraînées dans leur mouvement d'avance par les tiges des chaînes latérales, sont aussi contraintes à se déplacer latéralement, en réalisant ainsi l'action d'écartement demandée.

Ces caractéristiques de l'invention ainsi que d'autres seront mieux mises en évidence par la description de deux formes de réalisation possibles, données uniquement à titre d'exemple non limitatif, à l'aide des planches de dessin annexées sur lesquelles :
- la Fig. 1 (Planche I) représente une vue en plan de la bande transporteuse selon l'invention, munie de deux plans coulissants, dont l'un est linéaire et l'autre écarté, avec une rainure de guidage ;
- la Fig. 2 (Planche II) représente une vue en plan de la bande transporteuse de la Fig. 1, sans les chaînes latérales, les tiges ni les traverses,

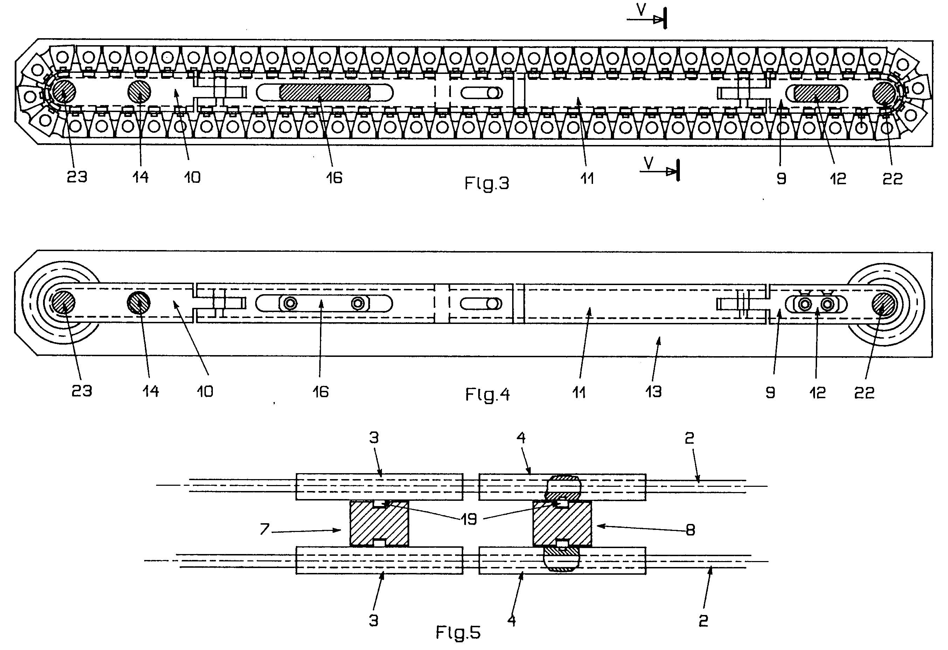

- la Fig. 3 (Planche III) représente une vue de côté, en coupe selon la ligne III-III de la Fig. 1 ;
- la Fig. 4 représente une vue de côté, en coupe selon la ligne IV-IV de la Fig. 2 ;
- la Fig. 5 représente une vue de détail en coupe selon la ligne V-V de la Fig. 3 ;
- la Fig. 6 (Planche IV) représente une vue en plan de la bande transporteuse selon l'invention, avec une lame de guidage ;
- la Fig. 7 (Planche V) représente une vue en plan de la bande transporteuse de la Fig. 6, sans les traverses ;
- la Fig. 8 (Planche VI) représente une vue de côté de ladite bande, en coupe selon la ligne VIII-VIII de la Fig. 6 ;
- les Fig. 9-10-11 représentent les trois vues d'une traverse pour guidage à lame.

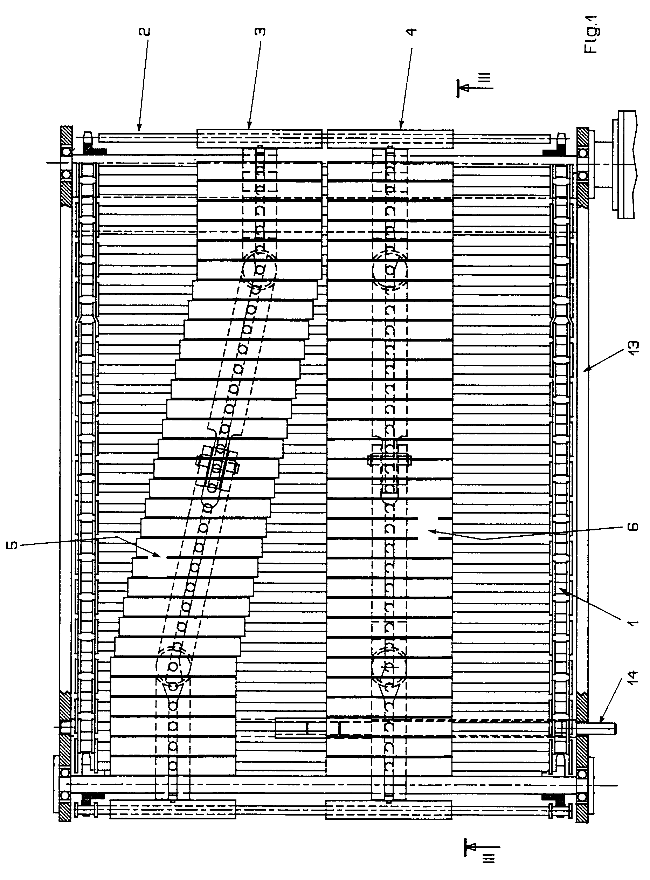

Comme on peut le voir sur la Fig. 1, la bande transporteuse selon l'invention se compose de deux chaînes à maillons 10, disposées parallèlement et réunies l'une à l'autre au moyen de tiges 2 perpendiculaires à l'axe des chaînes et, sur chaque tige, sont emboîtées de façon folle deux traverses 3, 4 qui vont constituer deux entités transporteuses distinctes 5 et 6 qui forment des chemins coulissants.

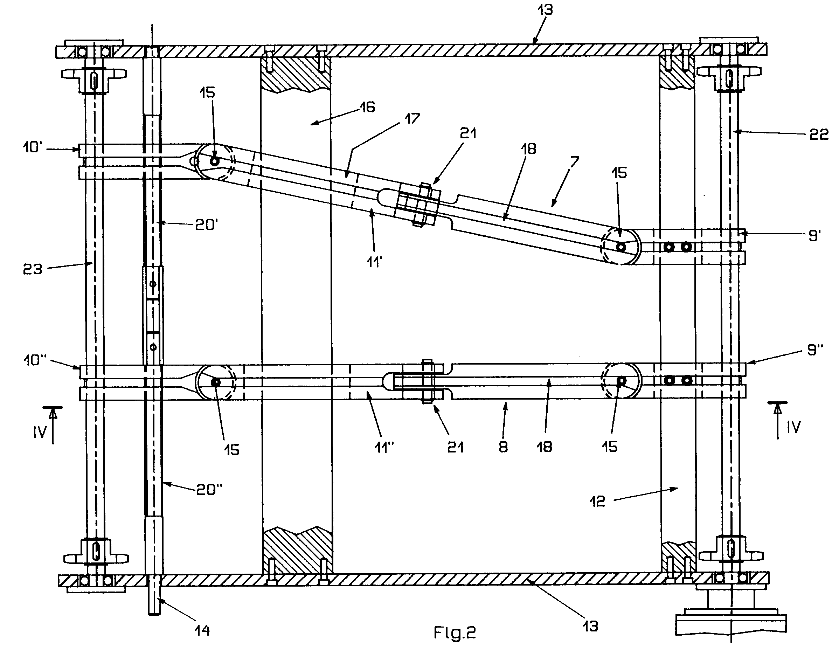

Comme on peut le voir sur la Fig. 2, dans une position sous-jacente à chaque entité transporteuse, se trouve une barre articulée 7, 8, composée de trois portions 9, 10, 11, qui sont initialement alignées selon la direction d'avance de l'ensemble de la bande transporteuse.

Les portions d'extrémité 9' et 9'' sont bloquées sur la barre transversale 12, qui est solidaire des longerons 13 de support de l'ensemble de la bande transporteuse.

Les portions d'extrémité 10', 10'' sont vissées sur un arbre fileté 14, solidaire desdits longerons 13.

Les portions intermédiaires 11' et 11'' sont articulées aux extrémités 15 et soutenues par une barre transversale 16 solidaire des longerons 13 et qui passe à travers des cavités 17 ménagées dans le corps desdites portions.

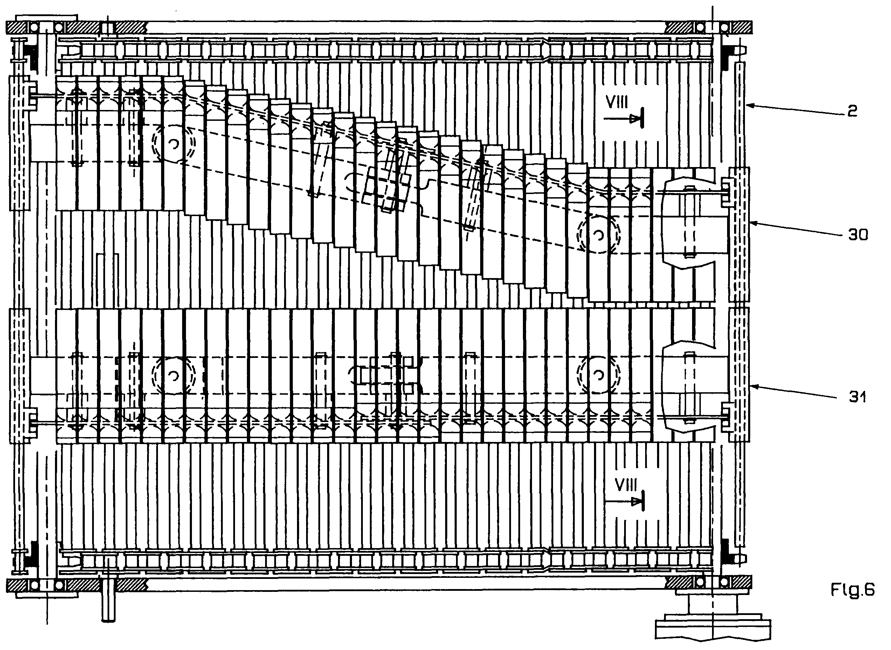

Comme on peut le voir sur les Fig. 2 et 5, chaque portion 9, 10, 11 des barres 7 et 8 présente sur sa surface extérieure une rainure 18 dans laquelle vient s'engager pour coulisser une saillie 19 dont chaque traverse 3 ou 4 est munie.

L'action d'écartement du chemin coulissant 5 par rapport au chemin coulissant 6 (voir Fig. 1), c'est-à-dire l'éloignement des traverses 3 par rapport aux traverses 4, est obtenue par la rotation de l'arbre 14, lequel engrène, par son filetage 20', dans la portion 10', en contraignant cette dernière à se déplacer latéralement.

En conséquence, la portion intermédiaire 11' est contrainte à modifier sa direction en se plaçant dans une position inclinée par rapport à la direction d'avance de la bande transporteuse.

Les deux portions intermédiaires 11' et 11'' sont avantageusement constituées par deux éléments réunis par un joint coulissant 21 qui sert à compenser la plus grande longueur que lesdites portions prennent lorsqu'elles sont dans une position inclinée.

Avec cette disposition définitive des barres 7 et 8 (voir Fig. 2), lorsque les chaînes 1 sont mises en mouvement entre l'arbre moteur 22 et l'arbre conduit 23, entraînent les tiges 2 vers l'avant, les traverses 3 et 4 avancent mais sont en même temps contraintes à suivre l'allure des rainures sous-jacentes respectives 18' et 18'', qui provoquent leur déplacement latéral.

En variante, par rapport à ce qui a été exposé plus haut, la fonction de guidage et de déplacement transversal des traverses est réalisée au moyen d'un profil de lame.

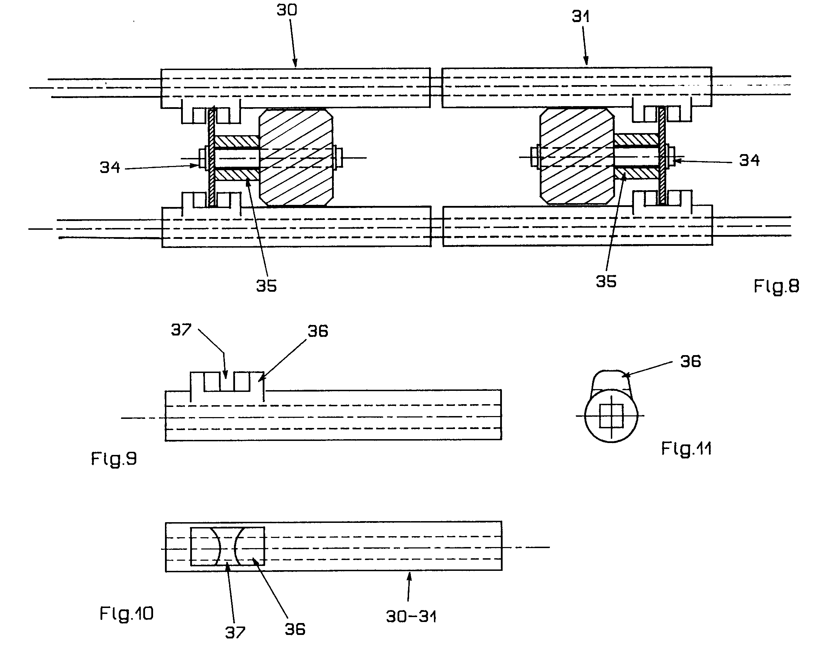

Comme on le voit sur les Fig. 6 à 11, les traverses 30, 31 sont munies d'une saillie latérale 36 qui entre en prise par sa rainure 37, convenablement conformée, sur les portions 32 et 33 d'une lame flexible qui, de son côté, est ancrée aux quatre portions des barres 7 et 8 par les tiges 34 et les entretoises 35.

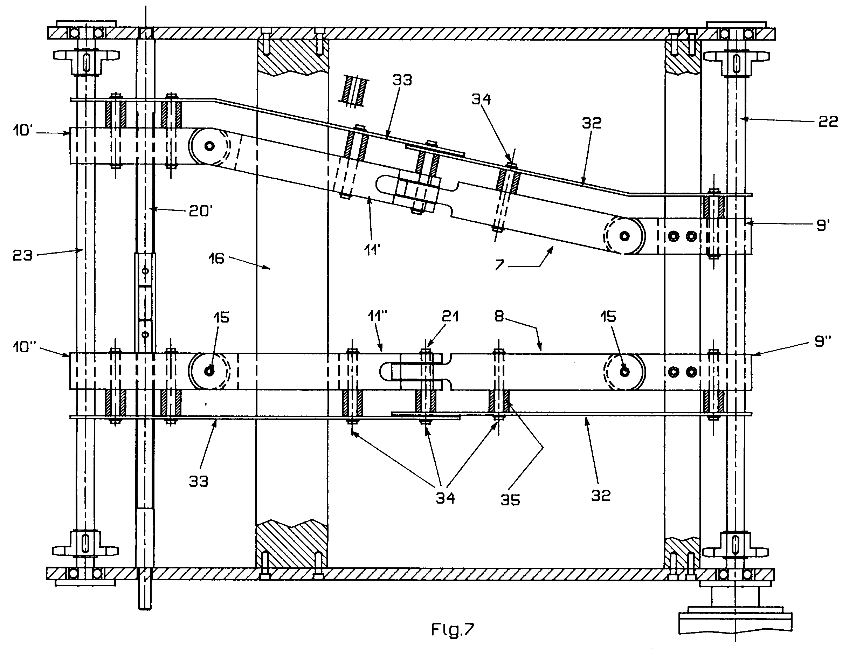

En définitive, avec les deux solutions, il est possible d'obtenir deux entités transporteuses coulissantes 5 et 6 ayant des profils différents et, plus précisément, l'entité coulissante 6 aura un parcours rectiligne tandis que l'entité coulissante 5 aura un parcours partiellement incliné, comme représenté sur les Fig. 1 et 7, en réalisant ainsi l'action d'écartement selon l'invention.

On peut facilement comprendre que, lorsqu'on tourne l'arbre fileté 14 dans le sens inverse du sens précédent, la portion 10'', en se vissant sur le filetage 20'', se déplace latéralement en engendrant une disposition de la bande transporteuse selon l'invention qui est l'opposé de celle représentée sur les Fig. 1 et 7.

Naturellement, en supplément des réalisations décrites, on peut aussi imaginer d'autres solutions, qui rentrent toujours dans le domaine du brevet comme, par exemple, celle qui prévoit au moins trois entités coulissantes dont l'entité centrale suit un parcours rectiligne tandis que les deux entités extérieures sont aptes à s'écarter, ou bien encore celle qui prévoit que les deux portions d'extrémité de chaque chemin coulissant sont aptes à se déplacer latéralement.

## Revendications

1. Bande transporteuse, comportant deux chaînes à maillons (1) entraînées en mouvement entre un arbre moteur (22) et un arbre conduit (23) supportés par les longerons latéraux (13), et réunies l'une à l'autre au moyen de tiges (2) perpendiculaires au plan des chaînes, caractérisée en ce que, sur chaque tige, sont emboîtées de façon folle au moins deux traverses (3, 4) distinctes et séparées, de manière à former au moins deux séries de traverses distinctes qui vont composer au moins deux entités transporteuses (5, 6), elles aussi distinctes et séparées, cependant que sont en outre prévus des moyens d'espacement des séries de traverses composant deux entités transporteuses adjacentes, pour former des chemins espacés l'un de l'autre.

2. Bande transporteuse selon la revendication 1, caractérisée en ce que, dans une position sous-jacente à chaque entité transporteuse (5, 6), se trouve une barre articulée (7, 8) comprenant au moins une portion centrale (11) et deux portions d'extrémité (9, 10), la portion centrale (11) étant articulée dans des extrémités adjacentes (15) des portions d'extrémité (9, 10).

3. Bande transporteuse selon la revendication 2, caractérisée en ce que, lors de l'avance de la bande transporteuse, au sein de chaque entité transporteuse (5, 6), au moins une des portions d'extrémité (9, 10), dont est pourvue la barre articulée (7, 8), est contrainte à se déplacer latéralement, cependant que la portion intermédiaire (11) est en conséquence contrainte à se disposer dans une position inclinée par rapport à la direction d'avance de la bande transporteuse.

4. Bande transporteuse selon la revendication 3, caractérisée en ce que les traverses qui constituent la portion d'extrémité (10) qui s'écarte latéralement se déplacent aussi latéralement, toutes de la même distance.

5. Bande transporteuse selon l'une des revendications précédentes, caractérisé en ce que les traverses qui constituent la portion intermédiaire (11) qui se dispose dans une position inclinée se déplacent latéralement d'une façon incrémentale les unes par rapport aux autres.

6. Bande transporteuse selon l'une des revendications 1 à 4, caractérisée en ce que le déplacement latéral d'au moins une des portions d'extrémité (10', 10'') s'effectue au moyen d'un accouplement fileté (20', 20'') avec un arbre rotatif (14).

7. Bande transporteuse selon l'une ou plusieurs des revendications précédentes, caractérisée en ce que, sur la surface extérieure des portions (9, 10, 11) de la barre articulée (7, 8), est formée une rainure (18) dans laquelle une saillie inférieure (19) de chaque traverse (3, 4) est engagée à coulissement.

8. Bande transporteuse selon l'une des revendications 1 à 6, caractérisée en ce qu'à la barre articulée (7, 8) est ancrée, dans une position latérale, une lame flexible (32, 33) sur laquelle vient s'engager à coulissement une rainure (37) ménagée dans une saillie (36) dont chaque traverse (30, 31) est munie.
